Europäisches Patentamt

European Patent Office

Office européen des brevets

(19)

(11) Numéro de publication: **0 250 282**
**A1**

(12) # DEMANDE DE BREVET EUROPEEN

(21) Numéro de dépôt: **87401137.2**

(22) Date de dépôt: **21.05.87**

(51) Int. Cl.⁴: **E 03 C 1/10**
**F 16 K 15/00**

(30) Priorité: **21.05.86 FR 8607175**

(43) Date de publication de la demande:
**23.12.87 Bulletin 87/52**

(84) Etats contractants désignés:
**AT BE CH DE ES FR GB IT LI NL**

(71) Demandeur: **Massini, Bernard**
**8 Seute de la Tour Fine**
**F-95220 Herblay (FR)**

**Larguier, Maurice**
**30 rue du 42ème de Ligne**
**F-94 340 Joinville (FR)**

**Pretceille, Jean-Michel**
**30 rue Claude Bénard**
**F-95 610 Eragny (FR)**

(72) Inventeur: **Massini, Bernard**
**8 Seute de la Tour Fine**
**F-95220 Herblay (FR)**

**Larguier, Maurice**
**30 rue du 42ème de Ligne**
**F-94 340 Joinville (FR)**

**Pretceille, Jean-Michel**
**30 rue Claude Bénard**
**F-95 610 Eragny (FR)**

(54) **Disjoncteur hydraulique controlable à zone atmosphérique d'évacuation du débit inverse.**

(57) L'invention concerne un dispositif permettant sans risque de pollution par retour, la liaison de deux réseaux de fluide sous pression, l'un alimentant normalement l'autre.

Il est constitué d'un obturateur amont (2), d'une zone intermédiaire (4) en forme de siphon inversé, d'un obturateur aval (5), et de dispositifs de mise à l'atmosphère (12) et (18) situés respectivement en partie basse et haute de la zone (4). En cas de situation de retour de fluide, même si les obturateurs (5) et (2) sont en défaut d'étanchéité, le débit en retour est évacué à l'atmosphère par la soupape (12), l'obturateur amont (2) n'étant pas mis en contact avec le flux en retour du fait de la soupape (18) dont la commande est synchrone à celle de la soupape (12).

Le dispositif selon l'invention est particulièrement destiné à la protection des réseaux de distribution d'eau potable.

FIGURE 1

EP 0 250 282 A1

## Description

Disjoncteur hydraulique controlable à zone atmosphérique d'évacuation du débit inversé.

La présente invention concerne les dispositifs qui permettent la liaison unidirectionnelle de deux réseaux sous pression, l'un, nourricier, desservant normallement l'autre, et empêchant la pollution du réseau nourricier par suite d'un phénomène de retour.

Les dispositifs connus de ce genre, dénommés habituellement disconnecteur à zone de pression réduite contrôlable et utilisés sur les réseaux de distribution d'eau, comprennent en général deux clapets anti retour en série délimitant une zone intermédiaire. Une soupape de décharge fermée en fonctionnement normal permet, dans certaines conditions de pression entre l'amont et l'aval de l'appareil, de faire communiquer cette zone intermédiaire avec l'atmosphère. Ainsi, lorsque le clapet anti-retour aval de l'appareil n'est pas étanche, le flux en retour éventuellement pollué est dirigé vers l'extérieur.

La capacité d'évacuation de la soupape de décharge est nettement améliorée par l'existence d'une entrée d'air dans la zone intermédiaire distincte de l'orifice de décharge.

Un dispositif tel que celui décrit dans le brevet US no 910509 (30 mai 1978 Rand H. Ackroyd) comporte cette particularité du système de décharge.

Or, il s'avère qu'en situation d'évacuation d'eau par le système de décharge, il y a contact physique de l'eau évacuée avec le clapet anti-retour amont. Cette situation, dans le cas d'absence ou de manque d'étanchéité du clapet amont et sans égard à la valeur de la pression absolue amont, permet l'intercommunication entre le réseau aval et le réseau amont.

Le dispositif selon l'invention a pour but de rémédier à cette situation : il permet en effet de raccorder ensemble deux réseaux dont l'un serait susceptible de polluer l'autre à la suite d'un reflux. Le liquide pollué en retour est dirigé vers l'atmosphère, sans qu'au cours de cette décharge il y ait un quelconque contact physique avec le clapet anti retour amont : celui-ci reste toujours à une altitude supérieure à celle de la ligne piézométrique de l'écoulement à travers le dispositif de décharge.

L'avantage essentiel de l'invention consiste à permettre en toute sécurité, parce qu'il s'oppose à toute intercommunication entre l'aval et l'amont, la liaison entre deux réseaux dans le cas où les dispositifs anti-reflux connus ne sont pas installables faute d'une garantie de non pollution suffisante, tout en conservant l'usage de la pression motrice du liquide. De plus, la disposition modulaire de l'appareil selon l'invention, permet son adaptation à des conditions anormalement élevées de débit en retour.

L'invention est exposée ci-après à l'aide de dessins représentant seulement un mode de réalisation.

- la figure 1 représente une coupe par un plan vertical.

- la figure 2 est une vue partielle selon la coupe AA.

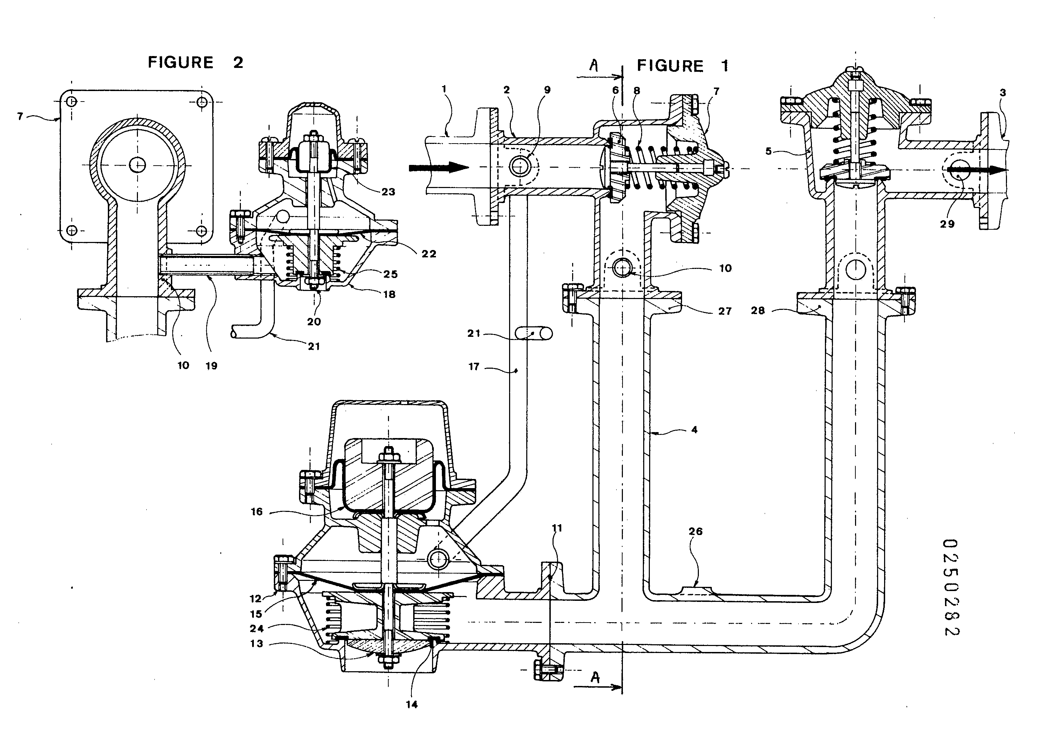

Sur la figure 1 le sens de circulation normal est de gauche à droite selon la direction des flèches.

L'écoulement provenant du réseau nourricier amont 1 traverse un clapet anti-retour 2 et rejoint le réseau utilisateur 3 en parcourant le corps 4 limité par les brides 27 et 28. Dans un mode de réalisation préférentiel, l'écoulement traverse aussi un clapet anti-retour 5 identique, au ressort 8 prés, au clapet 2.

Le clapet 2, d'un modèle connu, comporte un piston 6 guidé dans un alésage du couvercle 7, et maintenu fermé par un ressort 8. Des bossages latéraux en entrée 9 et en sortie 10 permettent les liaisons pour la transmission de pression. La zone intermédiaire 4 est en forme de siphon inversé disposé dans un plan vertical et possède à sa partie basse une bride 11 sur laquelle un dispositif de décharge 12 est placé. La soupape de décharge 12 comporte un équipage mobile 13 qui isole de l'atmosphère par l'étanchéité 14 la zone intermédiaire 4 au moyen des membranes 15 et 16 sur lesquelles s'exerce la pression amont amenée par la tubulure 17 depuis le bossage 9. Sur le bossage 10 du clapet 2 est installée une soupape 18 par un raccord 19. Cette soupape 18 fonctionne de manière analogue et synchronisée à la soupape 12 : l'équipage mobile 20 isole la zone 4 de l'atmosphère par l'effet de la pression amont amenée par le tube 21 sur les membranes 22 et 23. Le tube 21 est piqué sur le tube 17.

En position de repos, hors pression, les clapets 2 et 5 sont fermés par l'action des ressorts 8, les soupapes de décharge 12 et 18 sont ouvertes par l'action des ressorts 24 et 25.

Lorsqu'une pression amont s'exerce dans le réseau 1, elle a pour effet de fermer les soupapes 12 et 18 avant de commencer à ouvrir le clapet 6. Le réseau aval 3 est alors alimenté sans qu'il y ait d'échappement à l'atmosphère.

En cas de situation de retour, soit lorsque la pression en 3 devient supérieure d'une valeur prédéfinie par les ressorts 24 et 25 à la pression en 1, les soupapes 12 et 18 s'ouvrent. Si alors le clapet 5 est inexistant ou n'est pas étanche, le débit en retour provenant de 3 est évacué en 14 par la soupape 12, la soupape 18 ayant pour fonction de mettre à l'atmosphère la colonne d'eau constituée par la forme du corps 4, ce qui détermine la cote piézométrique de l'écoulement à travers la soupape 12. Une prise de pression 26 sur le corps 4 permet de contrôler le fonctionnement.

Ainsi qu'il l'a été exprimé, l'invention ne se limite pas au mode de réalisation décrit ci-dessus ; de part le conception de l'appareil la capacité d'évacuation du débit en retour peut-être largement augmentée par l'interposition, au niveau de la bride 11 du corps 4 d'une pièce permettant le raccordement de plusieurs soupapes 12, la tubulure 17 se subdivisant en autant d'embranchements que nécessaire.

Le caractère modulaire du dispositif selon l'invention et son adaptabilité à des valeurs de débit en retour possible particulièrement élevées sont représentés par la possibilité de placer une manchette à brides entre les brides 27 et 28 d'une part et les clapets 2 et 5 d'autre part.

Des prises de pression en 9, 26 et 29 respectivement à l'entrée du clapet amont 2, en bas du corps 4 et en sortie du clapet aval 5 permettent de contrôler le bon fonctionnement du dispositif.

## Revendications

1) Dispositif permettant la liaison unidirectionnelle de deux réseaux de fluide sous pression et s'opposant à une pollution par retour de fluide, du type comportant au moins un clapet anti-retour amont (2) et une soupape de décharge à l'atmosphère (12) caractérisé en ce que une seconde soupape de mise à l'atmosphère (18) est placée immédiatement en dessous du point le plus bas de l'obturateur amont (2) et au dessus de la première soupape (12), de telle sorte qu'en situation de retour, et sans égard aux conditions de celui-ci, le clapet amont se trouve toujours à une altitude supérieure à celle de la ligne piézométrique de l'écoulement en retour évacué.

2) Dispositif selon la revendication 1 caractérisé en ce que les soupapes inférieure (12) et supérieure (18) sont commandées par la même pression au moyen d'une tubulure unique (17).

3) Dispositif selon les revendications 1 et 2 caractérisé en ce que la zone intermédiaire (4) est en forme de siphon inversé.

4) Dispositif selon la revendication 3 caractérisé en ce que la zone intermédiaire (4) peut être allongée dans la direction verticale en tant que de besoin au moyen de manchettes à brides.

5) Dispositif selon la revendication 1 caractérisé en ce que plusieurs soupapes de décharge (12) sont disposées en partie basse de la zone intermédiaire (4).

6) Dispositif selon la revendication 5 caractérisé en ce que les soupapes inférieures (12) et la soupape supérieure (18) sont commandées par la même tubulure (17).

FIGURE 2

FIGURE 1

0250282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 427 532  (WATTS REGULATOR CO.) <br> * Page 1, lignes 23-26; page 4, lignes 11-23; page 5, lignes 3-22; figure 2 * <br><br> --- | 1 | E 03 C   1/10 <br> F 16 K  15/00 |
| A | US-A-4 489 746  (J.L. DAGHE et al.) <br> * Figure 1; colonne 2, lignes 16-20,25-39 * <br><br> --- | 1,3 | |
| A | FR-A-  852 896  (JUNKERS & CO. GmbH) <br> * Page 2, lignes 74-79,88-91; figure 2 * <br><br> --- | 1 | |
| A | US-A-2 538 281  (L.L. SNYDER) <br><br> ----- | | **DOMAINES TECHNIQUES RECHERCHES (Int. Cl.4)** <br><br> E 03 C |

Le présent rapport de recherche a été établi pour toutes les revendications

| Lieu de la recherche <br> LA HAYE | Date d'achèvement de la recherche <br> 16-07-1987 | Examinateur <br> BIRD,C.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82